(19) Europäisches Patentamt
European Patent Office
Office européen des brevets

(11) Veröffentlichungsnummer: **0 238 781 B1**

(12) **EUROPÄISCHE PATENTSCHRIFT**

(45) Veröffentlichungstag der Patentschrift: **08.08.90**

(51) Int. Cl.⁵: **C01B 31/04**

(21) Anmeldenummer: **86890082.0**

(22) Anmeldetag: **27.03.86**

(54) **Verfahren zur Gewinnung von hochreinem Graphit aus Naturgraphit.**

(43) Veröffentlichungstag der Anmeldung:
**30.09.87 Patentblatt 87/40**

(45) Bekanntmachung des Hinweises auf die Patenterteilung:
**08.08.90 Patentblatt 90/32**

(84) Benannte Vertragsstaaten:
**AT BE CH DE FR GB LI LU NL**

(56) Entgegenhaltungen:
**AT-B- 220 123**
**DE-C- 367 845**
**FR-A- 2 238 670**

**CHEMICAL ABSTRACTS, Band 73, Nr. 14, 5. Oktober 1970, Seite 90, Zusammenfassung Nr. 68094w, Columbus, Ohio, US; & RO-A-52 314 (ROMANIA, MINING ENTERPRISE) 20-06-1970**
**CHEMICAL ABSTRACTS, Band 87, Nr. 22, 28. November 1977, Seite 113, Zusammenfassung Nr. 169931m, Columbus, Ohio, US; G.I. KOLESETSKAYA et al.: "Chemical enrichment of graphite by autoclave leaching", & SB. TR. VSES. NAUCHNO-ISSLED. INST. NERUDN. STROIT. MATER. GIDROMEKH. 1976, 40, 102-6n-hexylocatanamides", & COM- NAZ. ENERG. NUCL., [RAPP. TEC.] CN 000**
**CHEMICAL ABSTRACTS, Band 92, Nr. 4, 28. Januar 1980, Seite 168, Zusammenfassung Nr. 25090s, Columbus, Ohio, US; & IN-A-145 466 (COUNCIL OF**

(73) Patentinhaber: **VOEST-ALPINE INDUSTRIEANLAGENBAU GESELLSCHAFT m b.H., Turmstrasse 44, A-4020 Linz(AT)**

(72) Erfinder: **Lazar, Gerhard, Mag. Dr., Thurnhof 35, A-4320 Perg(AT)**
Erfinder: **Spatzek, Heinz, Dr., Dipl.-Ing., Kaisersberg 104, A-8713 St. Stefan ob Leoben(AT)**
Erfinder: **Wiesinger, Reinhard, Klausenbachstrasse 17, A-4040 Linz(AT)**
Erfinder: **Hans, Walter, Burggasse 12, A-8652 Kindberg(AT)**
Erfinder: **Reiterer, Hans-Detlef, Dr., Sandgasse 47, A-8010 Graz(AT)**

(74) Vertreter: **Wolfram, Gustav, Dipl.-Ing., Schwindgasse 7 P.O. Box 205, A-1041 Wien(AT)**

(56) Entgegenhaltungen: (Fortsetzung)
**SCIENTIFIC AND INDUSTRIAL RESEARCH (INDIA)) 14-10-1978**
**CHEMICAL ABSTRACTS, Band 76, Nr. 8, 21. Februar 1972, Seite 85, Zusammenfassung Nr. 35678y, Columbus, Ohio, US; A.T. SLYUSAREV et al.: "Decreasing the ash content of scrap and natural graphite by using an alkali solution", & ZH. PRIKL. KHIM. (LENINGRAD) 1971, 44(10), 2369-70, 40, 102-6n-hexylocatanamides", & COM- NAZ. ENERG. NUCL., [RAPP. TEC.] CN 000**
**CHEMICAL ABSTRACTS, Band 82, Nr. 2, 13. Januar 1975, Seite 81, Zusammenfassung Nr. 5681a, Columbus, Ohio, US; & IN-A-130 442 (COUNCIL OF SCIENTIFIC AND INDUSTRIAL RESEARCH, INDIA) 23-03-1974**

**EP 0 238 781 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zur Gewinnung von hochreinem Graphit aus Naturgraphit durch Erhitzen von feinteiligem rohem oder vorgereinigtem Naturgraphit mit einer wässerig-alkalischen Lösung unter Druck, Verdünnen mit Wasser, Auswaschen des behandelten Graphits mit heißem Wasser, saure Nachbehandlung, Waschen des säurebehandelten Graphits mit heißem Wasser und Trocknen.

Ein Verfahren zur Herstellung von Graphit mit über 99% Kohlenstoff ist bereits aus der AT-B 90 118 bekannt geworden. Neben der Anweisung, Graphite mit einer wässerigen Lösung von Alkalien oder Alkalicarbonaten auf Drucke von mindestens 18 Atmosphären zu erhitzen, finden sich in der AT-B 90 118 keinerlei konkrete Angaben bezüglich der Verfahrensparameter und bezüglich der tatsächlich erreichten Reinheit des Graphites. Der korrespondierenden DE-C 367 845 können weitere Angaben über dieses Verfahren entnommen werden. Danach wird Graphit (87°C) mit 25%iger NaOH sechs Stunden lang in einem Autoklaven auf 210°C bis 250°C erhitzt. Nach mehrmaligem Auslaugen mit heißem Wasser wird der Graphit mit verdünnter Salzsäure gewaschen, abfiltriert, mit heißem Wasser nachgewaschen, getrocknet und so auf einen C-Gehalt von 99,88% gebracht.

Nach den derzeit gebräuchlichsen Methoden wird mittels Flotation vorgereinigter Naturgraphit mit ca. 85 bis 93% Kohlenstoff entweder durch Behandlung mit Flußsäure oder mit einer Sodaschmelze gereinigt. Infolge der bei der Behanldung mit Flußsäure notwendigen erhöhten Temperatur können in das Schichtgitter des Graphites bereits relativ leicht Fluoratome eingebaut werden, was beispielsweise im Anwendungsbereich Batterie, feuerfeste Steine und ähnlichem zu ernsten Problemen führt. Außerdem stellen die Abwässer aus einer solchen Behandlung eine außergewöhnliche Umweltbelastung dar.

Das energieaufwendige Schmelzen mit Soda (Sodaaufschluß) muß meist mehrmals durchgeführt werden, um hochreine Graphitsorten zu erhalten. Dazu kommen noch die hohen Anlagekosten, bedingt durch teure oder aber schnell verschleißende Konstruktionsmaterialien, welche mit den Sodaschmelzen, denen oftmals sogar fluorhältige Verbindungen zugesetzt werden, bei Temperaturen von mindestens 500°C in Kontakt kommen.

In der DE-B 2 337 428 ist eine Behandlung von Graphit mit einer säurefreien wässerigen Lösung eines Ammonium- und/oder Alkalimetallhydrogendifluorids bei Temperaturen von 50 bis 120°C – zweckmäßig bei Normaldrcuk – beschrieben.

Die verwendeten Hydrogendifluoride sind giftige Substanzen und der Umgang mit hochkonzentrierten Lösungen davon erfordert aufwendige Arbeitsschutzmaßnahmen. Als Materialien für die Behandlungsbehälter eignen sich trotz der relativ niedrigen Behandlungstemperaturen wieder nur teure Werkstoffe, wie Nickel-Kupfer-Legierungen. Sind im Graphit mineralische Verunreinigungen enthalten, die mit Hydrogendifluoriden nicht aufschließbar sind, muß vor oder nach der Behandlung mit Hydrogendifluorid zusätzlich ein alkalischer oder erdalkalischer Aufschluß durchgeführt werden, woran sich zweckmäßig noch eine Säurebehandlung anschließen kann. Das an der Luft zerfließliche Ammoniumhydrogendifluorid kann destillativ aus wässerigen Lösungen rückgewonnen werden, doch sind auch dafür aufwendige Apparaturen und hoher Energieeinsatz notwendig.

Die AT-B 220 123 beschreibt ein Verfahren, bei dem 220 Teile Graphit (85 bis 90% C) mit 200 Teilen Wasser und 100 Teilen konzentrierter Lauge in einen Autoklaven eingebracht werden. Die Mischung wird mehrere Stunden bei 250°C und einem Druck von 40 at. behandelt. Danach wird sie mit Wasser verdünnt und bei einer Temperatur von 70°C bis 100°C gewaschen. Der behandelte Graphit wird mit 60 Teilen Säure gerührt und 16 bis 72 Stunden mit einem Fluorid unter sauren Bedingungen weiterbehandelt. Anschließend wird der Graphit mit heißem Wasser mehrmals ausgewaschen und getrocknet.

Die Erfindung stellt sich die Aufgabe, die Nachteile und Schwierigkeiten bekannter Verfahren zu überwinden und ein betriebssicheres Verfahren zu entwickeln, bei welchem vergleichsweise billige und leicht zugängliche, gegebenenfalls rückgewinnbare Chemikalien zum Einsatz kommen, bei dem keine die Umwelt erheblich gefährdenden Produkte entstehen und wobei mit Anlagenteilen aus bestimmten Stahlsorten bzw. aus Kunststoffen das Auslangen gefunden wird.

Die gestellte Aufgabe wird bei einem Verfahren der eingangs erwähnten Art erfindungsgemäß dadurch gelöst, daß man die Behandlung mit der wässerig-alkalischen Lösung unter einem Druck von 20 bis 40 bar und bei Temperaturen zwischen 220 und 280°C durchführt, wobei man die 1,5- bis 3-fache Menge an zur Überführung der im Naturgraphit enthaltenen Gangart in lösliche Verbindungen theoretisch benötigter Menge von Alkalimetallhydroxid und/oder -carbonat einsetzt, die erhaltene Suspension auf eine Temperatur von 70 bis 90°C abkühlt, mit Wasser und/oder einer wässerigen Natriumchloridlösung von etwa gleicher Temperatur wie die Suspension im Verhältnis 1:1 bis 1:2 verdünnt, die alkalisch-wässrige Lösung bei einer Temperatur über 50°C vom Graphit abtrennt, den abgetrennten Graphit mit einem neutralen wässerigen Medium einer Temperatur von 50 bis 80°C bis zum Erreichen des Neutralpunktes der Waschflüssigkeit wäscht, anschließend bei einer Temperatur zwischen 90°C und 45°C mit einer sauren, wässerigen Lösung nachbehandelt, den Graphit von der erhaltenen sauren Suspension wieder abtrennt und mit Wasser, vorzugsweise entionisiertem Wasser neutral wäscht.

Nach dem erfindungsgemäßen Verfahren wird zweckmäßig ein durch Flotation vorgereinigter Naturgraphit mit etwa 85 bis 93% Kohlenstoff als Ausgangsprodukt eingesetzt. Bei Einsatz von rohem Naturgraphit ergibt sich wegen des erhöhten Chemikalienbedarfes eine verminderte Wirtschaftlichkeit.

Die erfindungsgemäß bei der Behandlung mit wässerig-alkalischer Lösung einzuhaltenden Temperatur- und Druckintervalle sind von wesentlicher Bedeutung, da nur in diesem Bereich aus praktisch allen zur Verfügung stehenden Naturgraphitsorten durch die alkalische Behandlung allein innerhalb eines akzeptablen Zeitraumes mit Sicherheit ein Graphitkonzentrat von über 98% Kohlenstoff erhalten wird.

Aus dem $SiO_2$ und dem $Al_2O_3$ der Gangart bilden sich bei der Laugenbehandlung nach den folgenden Gleichungen

$SiO_2 + 4NaOH \rightarrow Na_4SiO_4 + 2\ H_2O$ Wasserglas
und
$Al_2O_3 + 6NaOH \rightarrow 2Na_3AlO_3 + 3\ H_2O$ Aluminate

Zur überschlägigen Berechnung des theoretischen Laugenbedarfes unter Vernachlässigung der anderen Elemente gemäß Aschenanalyse nimmt man an, daß die Asche aus 60 % $SiO_2$ und 40 % $Al_2O_3$ besteht.

Die sogenannten Aschebildner bestehen hauptsächlich aus silikatischen und oxidischen, manchmal auch schwefelhältigen Mineralien. Umfangreiche Versuche zeigten, daß mit weniger als der erfindungsgemäß einzusetzenden Menge an Alkalimetallhydroxid und/oder -carbonat auch innerhalb sehr langer Aufschlußzeiträume keine vollständige Lösung der im Graphit enthaltenen Verunreinigungen erzielt werden kann. Eine Steigerung der Laugenmenge über die definierte Grenze hinaus ergab keine weitere Verbesserung der Anreicherung.

Es wurde weiters festgestellt, daß sich die Abtrennbarkeit - insbesondere die Filtrierbarkeit - der alkalisch-wässerigen Lösung vom Graphit bei Temperaturen unter 50°C rapid verschlechtert, wodurch auch die Nachbehandlung mit einer sauren wässerigen Lösung in ihrer Wirkung beeinträchtigt wird. Es ist anzunehmen, daß unterhalb dieser Temperatur bereits die Rückbildung der löslichen in unlösliche Verbindungen in merklichem Ausmaß stattfindet. Temperaturen über 90°C zu Beginn des Abtrennprozesses sind wegen der zulässigen Arbeitstemperatur der vorteilhaft verwendeten Filtermaterialien, nämlich Filtertüchern aus PVC oder Polyäthylen, nicht einzustellen. Auch bei Einsatz von beispielsweise Siebzentrifugen zur Abtrennung soll die angegebene Temperaturgrenze, u.a. aus Gründen der Materialschonung, nicht überschritten werden.

Für die Nachbehandlung können beispielsweise verdünnte Mineralsäurelösungen verwendet werden.

Bei der nach Abtrennung der sauren, wässerigen Lösung vom Graphit durchgeführten Waschbehandlung soll der erste Teil - etwa 1/5 der Gesamtmenge - des neutralen wässerigen Mediums eine Temperatur von etwa 50°C haben. Der restliche Teil kann Raumtemperatur aufweisen. Es hat sich herausgestellt, daß mit entionisiertem Wasser ein viel intensiverer Auswascheffekt als beispielsweise mit Leitungswasser erzielt wird.

Der auf diese Weise erhaltene Graphit hat in jedem Fall einen Reinheitsgrad von wenigstens 99,5 %. Er wird in einem Trockner schonend auf eine Endfeuchtigkeit von unter 0,3 % gebracht und kann danach versandfertig verpackt werden.

Vorteilhaft setzt man eine wässerig-alkalische Lösung mit einer Konzentration von etwa 30 Massen% an Natriumhydroxid ein. Eine solche Konzentration hat sich als wirtschaftliches Optimum herausgestellt.

Nach einer bevorzugten Ausführungsform setzt man der wässerig-alkalischen Lösung zusätzlich Erdalkalisalze und/oder Alkalisalze, wie z.B. Natriumchlorid, Lithiumhydroxid oder Bariumhydroxid zu, wodurch das Herauslösen der im Graphit außerordentlich homogen verteilten Gangart noch verbessert wird.

Besonders bevorzugt wird die Behandlung mit der wässerig-alkalischen Lösung unter periodischer Einwirkung von Ultraschall vorgenommen. Auf diese Weise wird eine gründliche Desaggregation der suspendierten Teilchen und damit ein besseres Eindringen des alkalischen Mediums in feinste Kanäle bewirkt.

Die Behandlung mit der wässerig-alkalischen Lösung wird zweckmäßig 2 bis 4 Stunden lang durchgeführt. Eine weitere Verlängerung der Behandlungsdauer bringt keine Verbesserung der Kohlenstoffanreicherung mit sich.

Bevorzugt wird zur Nachbehandlung eine saure, wässerige Lösung mit 10 bis 25 Massen% Chlorwasserstoffsäure und/oder Ammoniumchlorid bzw. Natriumchlorid eingesetzt. Salzsäure bzw. ein saures Salz davon ist wirkungsvoller als beispielsweise Schwefelsäure. Höhere Konzentrationen an sauren Agentien bringen keine weiteren Vorteile, erschweren jedoch das Neutralwaschen des Graphits.

Bei Einsatz eines Naturgraphites mit über 1 % Eisengehalt wird der Graphit vor der Behandlung mit der wässerig-alkalischen Lösung zweckmäßig einer Behandlung in verdünnter Säure bei 20 bis 85°C unterzogen.

Zur Gewinnung von Graphit mit einer Reinheit von über 99,5 %, insbesondere über 99,8 % Kohlenstoff behandelt man den mit Wasser neutral gewaschenen Graphit mit einer verdünnten, wässerigen Lösung von Fluorverbindungen bei einer Temperatur von 10 bis 45°C nach und wäscht abschließend mit entionisiertem Wasser neutral, gegebenenfalls unter Einwirkung von Ultraschall. Auf diese Weise kann auch höchstreiner Graphit mit einer Reinheit von mehr als 99,8 % erhalten werden.

Das erfindungsgemäße Verfahren wird durch die folgenden Beispiele noch näher erläutert.

Beispiel 1:

100 kg Naturgraphit (Kohlenstoffgehalt 85,3 %, durchschnittliche Korngröße 0,125 mm) werden in einem Rührgefäß mit 140 l 30%iger Salzsäure bei ca. 25°C 5 Stunden Lang mit 60 UpM ausgerührt, anschließend wird filtriert und mit Wasser gewaschen. Der so vorbehandelte Graphit wird mit einer Mischung aus 180 kg 30%iger Natronlauge und 5,7 kg Natriumchlorid in einen Rührwerksautoklaven eingebracht und innerhalb von 20 min auf 250°C gebracht. Danach wird durch Zugabe von Lithiumhydroxid eine Lithiumkonzentration von ca. 0,5 g/l eingestellt, und der Autoklav wird 3,5 h lang in einem Temperaturintervall von 250 bis 270°C und dem entsprechenden Druck (ca. 30 bis 40 bar) gehalten. Danach wird innerhalb von 15 min auf maximal 90°C abgekühlt und die Suspension in einem Rührbehälter mit ebenso heißer, ca. 5%iger Natriumchloridlösung im Verhältnis 1 : 1,25 verdünnt. Die Suspension wird heiß filtriert und zuerst mit heißer, ca. 10%iger Natriumchloridlösung, danach mit Heißwasser gewaschen.

Der feuchte Filterkuchen wird mit 120 l einer 15 % HCl und 5 % Ammoniumchlorid enthaltenden wässerigen Lösung in einen beheizbaren Rührbehälter eingebracht. Während des ca. einstündigen Ausrührens wird die Anfangstemperatur von ca. 90°C auf 45°C geführt, anschließend wird die Suspension am Filter von der Behandlungslösung getrennt und mit entionisiertem Wasser unter pH-Kontrolle neutral gewaschen. Nach einer Trocknung bei 200 bis 250°C wurde ein Kohlenstoffgehalt des erhaltenen Graphits von 99,58 % bestimmt.

Beispiel 2:

100 kg Naturgraphit (Kohlenstoffgehalt 82,3 %, durchschnittliche Korngröße 0,250 mm) werden direkt in einen Rührwerksautoklaven eingebracht und mit einer Mischung aus 190 kg 30%iger Natronlauge sowie 2,5 kg Natriumchlorid innerhalb von 20 min auf eine Temperatur von 230°C gebracht. Durch Zugabe von Bariumhydroxid wird eine Bariumkonzentration von 0,15 g/l eingestellt und der Autoklav wird im Verlauf von 2 Stunden allmählich auf eine maximale Temperatur von 275°C gebracht. Nach dem raschen Abkühlen auf eine Temperatur von ca. 90°C wird die Suspension mit heißem Wasser im Verhältnis 1 : 1 verdünnt, ca. 15 min lang gerührt und nach Zusatz einer heißen, ca. 10%igen Natriumchloridlösung heiß filtriert. Der feuchte Filterkuchen wird in einem Rührbehälter mit einer ca. 10%igen Ammoniumchloridlösung ($NH_4Cl$) gerührt, wobei die Temperatur von anfangs 90°C auf ca. 50°C geführt wird. Nach Filtration wird mit Wasser unter pH-Kontrolle neutral gewaschen und der erhaltene Filterkuchen feucht in einen weiteren Rührbehälter gebracht und ca. 8 h lang bei einer Temperatur von maximal 45°C mit 300 l einer wässerigen Suspension einer Mischung von Fluorverbindungen (ca. 10 % $F^{\ominus}$-Gehalt) behandelt, anschließend am Filter von der Behandlungslösung getrennt. Der Filterkuchen wird mit entionisiertem Wasser bis zu einem pH-Wert von 7 gewaschen. Nach anschließender Trocknung bei ca. 200 bis 250°C wurde ein Kohlenstoffgehalt von 99,83 % bestimmt.

Beispiel 3:

100 kg eines Naturgraphits (Kohlenstoffgehalt 85,0 %, durchschnittliche Korngröße 0,100 mm) werden in einem Rührgefäß mit 140 l einer Mischung von 30%iger Salzsäure und Beigabe von 20 kg Natriumchlorid bei erhöhter Temperatur 2,5 h lang gerührt. Anschließend wird filtriert und der Filterkuchen mit Wasser gewaschen. Der so vorbehandelte Filterkuchen wird feucht in einen Rührwerksautoklaven mit 180 kg 30%iger Natronlauge unter Zusatz von 12,5 kg Soda ($Na_2CO_3$) eingebracht und 2,5 h lang einer Temperatur von 260 bis 270°C und einem entsprechenden Druck von etwa 30 bis 40 bar ausgesetzt, wobei die Suspension alle 10 min jeweils 1 min lang und vor Ende des Aufschlusses 20 min lang mit Ultraschall einer Frequenz von 20 bis 40 kHz und einer Leistung von 2 × 1000 W beschallt wird. Danach wird innerhalb kurzer Zeit auf eine Temperatur von ca. 90°C abgekühlt, die Suspension wird in einen dreistufigen Gegenstromwascheindicker (CCD) eingebracht und mit einer heißen Ammoniumchloridlösung behandelt. Nach der dritten CCD-Stufe wird filtriert und der Filterkuchen neutral gewaschen. Dieser Filterkuchen wird dann feucht in einen weiteren Gegenstromwascheindicker eingebracht und ca. 8 h lang mit einer wässerigen Suspension von Fluorverbindungen (ca. 10% $F^{\ominus}$ Gehalt) unter Ultraschalleinwirkung behandelt, anschließend auf einem Filter von der Behandlungslösung getrennt. Der Filterkuchen wird mit entionisiertem Wasser bis zum pH-Wert von 7 gewaschen. Der Kohlenstoffgehalt nach einer Trocknung bei ca. 200 bis 250°C betrug 99,987 %.

Die fluorhältige Nachbehandlungslösung kann nach einer pH-Korrektur sowie nach einer Kontrolle der unerwünschten, sich in Lösung befindlichen Substanzen, welche ausgefällt und auf einem Filter abgetrennt werden können, wieder in den Gegenstromwascheindicker-Kreislauf zurückgeführt werden.

Mit Hilfe des erfindungsgemäßen Verfahrens ist nicht nur die Herstellung von höchstreinem Graphit möglich, sondern das Verfahren eignet sich vorteilhaft auch zur reproduzierbaren Herstellung von Graphit mit einem bestimmten, gewünschten Reinheitsgrad im Bereich zwischen 94 und 99,5 %.

## Patentansprüche

1. Verfahren zur Gewinnung von hochreinem Graphit aus Naturgraphit durch Erhitzen von feinteiligem rohem oder vorgereinigtem Naturgraphit mit einer wässerig-alkalischen Lösung unter Druck, Verdünnen mit Wasser, Auswaschen des behandelten Graphits mit heißem Wasser, saure Nachbehandlung, Waschen des säurebehandelten Graphits mit heißem Wasser und Trocknen, dadurch gekennzeichnet, daß man die Behandlung mit der wässerig-alkalischen Lösung unter einem Druck von 20 bis 40 bar und bei Temperaturen zwischen 220 und 280°C durchführt, wobei man die 1,5- bis 3-fache Menge an zur Überführung der im Naturgraphit enthaltenen Gangart in lösliche Verbindungen theoretisch benötigter Menge von Alkalimetallhydroxid und/oder -carbonat einsetzt, die erhaltene Suspension auf eine Temperatur von 70 bis 90°C abkühlt, mit Wasser und/oder einer wässerigen Natriumchloridlösung von etwa gleicher Temperatur wie die Suspension im Verhältnis 1:1 bis 1:2 verdünnt, die alkalisch-wässerige Lösung bei einer Temperatur über 50°C vom Graphit abtrennt, den abgetrennten Graphit mit einem neutralen wässerigen Medium einer Temperatur von 50 bis 80°C bis zum Erreichen des Neutralpunktes der Waschflüssigkeit wäscht, anschließend bei einer Temperatur zwischen 90°C und 45°C mit einer sauren, wässerigen Lösung nachbehandelt, den Graphit von der erhaltenen sauren Suspension wieder abtrennt und mit Wasser, vorzugsweise entionisiertem Wasser neutral wäscht.

2. Verfahren nach Anspruch 1, dadurch gekennzeichnet, daß man eine wässerig-alkalische Lösung mit einer Konzentration von etwa 30 Massen% an Natriumhydroxid einsetzt.

3. Verfahren nach Anspruch 1 oder 2, dadurch gekennzeichnet, daß man der wässerig-alkalischen Lösung zusätzlich Erdalkalisalze und/oder Alkalisalze, wie z.B. Natriumchlorid, Lithiumhydroxid oder Bariumhydroxid zusetzt.

4. Verfahren nach einem der Ansprüche 1 bis 3, dadurch gekennzeichnet, daß die Behandlung mit der wässerig-alkalischen Lösung unter periodischer Einwirkung von Ultraschall vorgenommen wird.

5. Verfahren nach einem der Ansprüche 1 bis 4, dadurch gekennzeichnet, daß man die Behandlung mit der wässerig-alkalischen Lösung 2 bis 4 Stunden lang durchgeführt.

6. Verfahren nach einem der Ansprüche 1 bis 5, dadurch gekennzeichnet, daß zur Nachbehandlung eine saure, wässerige Lösung mit 10 bis 25 Massen% Chlorwasserstoffsäure und/oder Ammoniumchlorid bzw. Natriumchlorid eingesetzt wird.

7. Verfahren nach einem der Ansprüche 1 bis 6, dadurch gekennzeichnet, daß bei Einsatz eines Naturgraphites mit über 1 % Eisengehalt der Graphit vor der Behandlung mit der wässerig-alkalischen Lösung einer Behandlung in verdünnter Säure bei 20 bis 85°C unterzogen wird.

8. Verfahren nach einem der Ansprüche 1 bis 7 zur Gewinnung von Graphit mit einer Reinheit von über 99,5 %, insbesondere über 99,8 % Kohlenstoff, dadurch gekennzeichnet, daß man den mit Wasser neutral gewaschenen Graphit mit einer verdünnten, wässerigen Lösung von Fluorverbindungen bei einer Temperatur von 10 bis 45°C nachbehandelt und abschließend mit entionisiertem Wasser neutral wäscht, gegebenenfalls unter Einwirkung von Ultraschall.

## Revendications

1. Procédé pour l'obtention de graphite de haute pureté à partir de graphite naturel par chauffage de graphite naturel brut ou pré-purifié en fines particules sous pression avec une solution aqueuse alcaline, dilution par l'eau, lavage à l'eau chaude de graphite traité, post-traitement par un acide, lavage à l'eau chaude du graphite traité à l'acide et séchage, caractérisé en ce que l'on effectue le traitement avec une solution aqueuse alcaline sous une pression de 20 à 40 bar et à des températures comprises entre 220 et 280°C, en utilisant 1,5 à 3 fois la quantité théoriquement nécessaire d'hydroxyde et/ou de carbonate de métal alcalin pour la transformation de la gangue contenue dans le graphite naturel en composés solubles, on refroidit la suspension obtenue à une température de 70 à 90°C, on la dilue par l'eau et/ou une solution aqueuse de chlorure de sodium à peu près à la même température que la suspension dans un rapport de 1:1 à 1:2, on sépare la solution alcaline aqueuse du graphite à une température de plus de 50°C, on lave le graphite séparé avec un milieu aqueux neutre d'une température de 50 à 80°C jusqu'à atteindre le point neutre du liquide de lavage, on le traite ensuite à une température comprise entre 90 et 45°C avec une solution aqueuse acide, on sépare à nouveau le graphite de la suspension acide obtenue et on le lave jusqu'à neutralité par l'eau, de préférence l'eau désionisée.

2. Procédé selon la revendication 1, caractérisé en ce que l'on utilise une solution alcaline aqueuse d'une concentration d'environ 30% en poids en hydroxyde de sodium.

3. Procédé selon la revendication 1 ou 2, caractérisé en ce que l'on ajoute encore à la solution alcaline aqueuse des sels alcalino-terreux et/ou des sels alcalins tels que par exemple chlorure de sodium, hydroxyde de lithium ou hydroxyde de baryum.

4. Procédé selon l'une des revendications 1 à 3, caractérisé en ce que le traitement par la solution alcaline aqueuse est effectué sous l'action périodique d'ultrasons.

5. Procédé selon l'une des revendications 1 à 4, caractérisé en ce que l'on effectue le traitement par la solution alcaline aqueuse pendant 2 à 4 h.

6. Procédé selon l'une des revendications 1 à 5, caractérisé en ce que l'on utilise pour le post-traitement une solution aqueuse acide à 10 à 25% en poids d'acide chlorhydrique et/ou de chlorure d'ammonium ou de chlorure de sodium.

7. Procédé selon l'une des revendications 1 à 6, caractérisé en ce que, dans l'utilisation d'un graphite naturel d'une teneur en fer de plus de 1%, le graphite est soumis avant le traitement par la solution alcaline aqueuse à un traitement dans l'acide dilué à 20–85°C.

8. Procédé selon l'une des revendications 1 à 7 pour l'obtention de graphite d'une pureté de plus de 99,5%, en particulier plus de 99,8% de carbone, caractérisé en ce que l'on traite ensuite le graphite lavé à l'eau jusqu'à neutralité par une solution aqueuse diluée de composés fluorés à une température de 10 à 45°C et enfin on le lave à l'eau désionisée jusqu'à neutralité, éventuellement sous l'action des ultrasons.

**Claims**

1. A process for recovering high-purity graphite from natural graphite by heating fine-particle crude or prepurified natural graphite with an aqueous alkaline solution under pressure, diluting with water, washing of the treated graphite with hot water, acid secondary treatment, washing of the acid-treated graphite with hot water and drying, characterised in that the treatment with the aqueous alkaline solution is carried out at a pressure of from 20 to 40 bar and at temperatures of between 220 and 280°C, wherein 1.5 to 3 times the amount of the theoretical amount of alkali metal hydroxide and/or alkali metal carbonate required to transform the gangue contained in natural graphite into soluble compounds is used, the suspension obtained is cooled to a temperature of from 70 to 90°C, is diluted with water and/or an aqueous sodium chloride solution having approximately the same temperature as the suspension at a ratio of from 1:1 to 1:2, the alkaline-aqueous solution is separated from the graphite at a temperature of above 50°C, the separated graphite is washed with a neutral aqueous medium at a temperature of from 50 to 80°C until reaching the neutral point of the washings and subsequently is treated a second time with an acid aqueous solution at a temperature of between 90°C and 45°C, the graphite is again separated from the acid suspension obtained and is washed neutral with water, preferably deionised water.

2. A process according to claim 1, characterised in that an aqueous alkaline solution having a concentration of about 30% by mass of sodium hydroxide is used.

3. A process according to claim 1 or 2, characterised in that alkaline earth salts and/or alkaline salts, such as, e.g., sodium chloride, lithium hydroxide or barium hydroxide are additionally added to the aqueous alkaline solution.

4. A process according to any one of claims 1 to 3, characterised in that the treatment with the aqueous alkaline solution is performed under periodic exposure to ultrasound.

5. A process according to any one of claims 1 to 4, characterised in that the treatment with the aqueous alkaline solution is performed for 2 to 4 hours.

6. A process according to any one of claims 1 to 5, characterised in that an acid aqueous solution containing 10 to 25% by mass of hydrochlorid acid and/or ammonium chloride or sodium chloride is used for the secondary treatment.

7. A process according to any one of claims 1 to 6, characterised in that, when using natural graphite having an iron content of more than 1%, the graphite is subjected to a treatment in a diluted acid at 20 to 85°C prior to being treated with the aqueous alkaline solution.

8. A process according to any one of claims 1 to 7 for recovering graphite having a purity of more than 99.5%, in particular, of more than 99.8%, carbon, characterised in that the graphite, after having been washed neutral with water, is treated a second time with a diluted aqueous solution of fluorine compounds at a temperature of from 10 to 45°C and finally is washed neutral with deionised water, if desired, under exposure to ultrasound.